# FASCICULE DE BREVET EUROPEEN

(11) **EP 3 560 165 B1**
(45) Date de publication et mention de la délivrance du brevet: **10.03.2021**
(21) Numéro de dépôt: 17829626.5
(22) Date de dépôt: 18.12.2017
(51) Int. Cl.: H04L 29/06, H04L 29/08, H04L 12/725

(54) **PROCEDE DE SECURISATION DE L'ACHEMINEMENT D'UN COURRIER ELECTRONIQUE ET SERVEUR DE COURRIER ELECTRONIQUE ASSOCIE**
VERFAHREN ZUR SICHERUNG DER WEITERLEITUNG VON ELEKTRONISCHER POST UND ENTSPRECHENDER SERVER FÜR ELEKTRONISCHE POST
METHOD FOR SECURING THE ROUTING OF ELECTRONIC MAIL AND ASSOCIATED ELECTRONIC MAIL SERVER

(30) Priorité: 21.12.2016 FR 1601825
(43) Date de publication de la demande: 30.10.2019
(73) Titulaire: Thales, 92400 Courbevoie (FR)
(72) Inventeur: CHEVALLIER, Michel, 92622 Gennevilliers Cedex (FR); LE MASSON, Marion, 92622 Gennevilliers Cedex (FR); LE PAGE, Cecilia, 92622 Gennevilliers Cedex (FR); ALCOUFFE, Fabien, 92622 Gennevilliers Cedex (FR)
(74) Mandataire: Lavoix
(86) Numéro de dépôt international: PCT/EP2017/083349
(87) Numéro de publication internationale: WO 2018/114823

(56) Documents cités:
- WO-A2-2009/028955
- US-A1- 2005 138 110
- US-A1- 2008 101 367
- US-A1- 2015 256 444
- US-A1- 2016 277 638

## Description

L'invention a pour domaine celui des services de courrier électronique.

L'échange de contenu par messagerie électronique s'effectue généralement sur la base de l'adresse de la boite aux lettres du destinataire, indiquée dans un champ correspondant de l'en-tête du courrier électronique à transmettre.

Il y a cependant un besoin pour pouvoir transmettre un courrier électronique en respectant un niveau de sécurité (ou plus généralement une politique de sécurité), avec lequel il doit être acheminé, niveau de sécurité défini de préférence au sein des domaines auxquels appartiennent l'émetteur et le destinataire de ce courrier.

Le document US 2005/138110 A1 divulgue la transmission d'un courrier électronique comportant les étapes consistant à : l'utilisateur prépare son courrier en étiquetant chaque paragraphe avec le niveau de sécurité avec lequel il doit être traité ; le courrier est envoyé à un premier serveur qui le décompose sur la base des différentes étiquettes et stocke les paragraphes associés au niveau élevé dans une première base de données et ceux associés au niveau plus faible dans une seconde base de données ; puis, le premier serveur remplace, dans le corps du courrier, les paragraphes venant d'être extraits par des pointeurs vers les espaces de stockage utilisés, avant de transmettre le courrier intermédiaire ainsi modifié vers un second serveur ; en fonction du niveau de sécurité du destinataire, le second serveur reconstruit un courrier final en ne téléchargeant que les paragraphes du courrier intermédiaire qui ont un niveau de sécurité compatible avec le niveau de sécurité du destinataire ; le destinataire accède au second serveur pour accéder au courrier final.

Le document US 2008/101367 A1 est relatif à un mécanisme de routage sur un réseau de communications IP. Selon des règles de routage configurables par l'opérateur, les routeurs du réseau sélectionnent un chemin de routage plutôt qu'un autre pour respecter une politique de sécurité particulière dans la transmission de paquets vers un destinataire.

L'invention a donc pour but de répondre à ce besoin de sécurisation des services de courrier électronique.

L'invention est définie par les revendications jointes. L'invention a pour objet un procédé de sécurisation de l'acheminement d'un courrier électronique entre un serveur de courrier électronique émetteur et un serveur de courrier électronique destinataire, connectés l'un à l'autre par un réseau IP, le réseau IP comportant au moins des premier et second sous-réseaux ayant des niveaux de sécurité différents entre eux, un paquet de données étant transmis entre une paire de nœuds du premier sous-réseau, respectivement du second sous-réseau, en garantissant qu'en chaque point du chemin de routage dudit paquet de données entre les nœuds de ladite paire de nœuds, ledit paquet de données sera traité selon un premier niveau de sécurité, respectivement un second niveau de sécurité, le serveur de courrier électronique émetteur étant connecté au premier sous-réseau par un premier point d'accès d'entrée et au second sous-réseau par un second point d'accès d'entrée et le serveur de courrier électronique destinataire étant connecté au premier sous-réseau par un premier point d'accès de sortie et au second sous-réseau par un second point d'accès de sortie, caractérisé en ce que ledit procédé consiste en les étapes suivantes, réalisées par le serveur de courrier électronique émetteur :
- analyser le contenu d'un courrier électronique à envoyer de manière à déterminer une valeur d'un indicateur de niveau de sécurité correspondant au niveau de sécurité avec lequel acheminer ledit courrier électronique sur le réseau IP vers le serveur de courrier électronique destinataire ;
- sélectionner, en fonction de la valeur de l'indicateur de niveau de sécurité et les premier et second niveaux de sécurité, le premier point d'accès d'entrée ou le second point d'accès d'entrée en tant que point d'accès au réseau IP à qui transmettre le courrier électronique à envoyer ; et,
- transmettre le courrier électronique à envoyer au point d'accès d'entrée sélectionné.

L'invention met ainsi avantageusement à profit, pour un service de courrier électronique, le fait connu qu'il est possible de configurer un réseau IP de manière à y définir une pluralité de sous-réseaux, chaque sous-réseau étant caractérisé par un niveau de sécurité particulier et permettant l'acheminement d'un datagramme IP entre n'importe quelle paire de nœuds de ce sous-réseau en garantissant que le chemin de routage reliant ces deux nœuds est situé intégralement à l'intérieur de ce sous-réseau, et que, par conséquent, le datagramme IP sera traité conformément au niveau de sécurité associé à ce sous-réseau en chaque point de son acheminement.

Suivant des modes particuliers de réalisation, le procédé comporte une ou plusieurs des caractéristiques suivantes prises isolément ou suivant toutes les combinaisons techniquement possibles :
- le réseau IP comportant un orchestrateur réseau propre à déterminer, à chaque instant, le premier niveau de sécurité susceptible d'être fourni par le premier sous-réseaux et le second niveau de sécurité susceptible d'être fourni par le second sous-réseau, l'étape de sélection consiste à interroger l'orchestrateur réseau pour obtenir un identifiant d'au moins un sous-réseaux propre à fournir un niveau de sécurité conforme à la valeur de l'indicateur de niveau de sécurité déterminée lors de l'étape d'analyse, puis à sélectionner, en tant que point d'accès d'entrée, le point d'accès connectant le serveur de courrier électronique émetteur au sous-réseau dont l'identifiant correspond à celui indiqué par l'orchestrateur réseau.
- un utilisateur associe à un courrier électronique à envoyer, une valeur de l'indicateur de niveau de sécurité.
- l'étape d'analyse consiste à déterminer un identifiant de destinataire correspondant à un destinataire du courrier électronique, et à lire, dans un annuaire du serveur de courrier électronique émetteur la valeur de l'indicateur de niveau de sécurité associée audit identifiant de destinataire.
- s'il est déterminé que le courrier électronique à envoyer comporte plusieurs identifiants de destinataire et que les valeurs de l'indicateur de niveau de sécurité associées à chacun desdits identifiants de destinataires sont différentes entre elles, le courrier électronique n'est pas transmis.
- le procédé comporte en outre les étapes consistant à : déterminer si le courrier électronique à envoyer possède plusieurs identifiants de destinataire ; dans l'affirmative, consulter une base de données associant à chaque identifiant de destinataire une valeur d'un indicateur de qualité de réception correspondant à une capacité du destinataire de recevoir et consulter un courrier électronique en temps réel ; et, au cas où les valeurs des indicateurs de qualité de réception diffèrent entre elles, modifier le courrier électronique à envoyer de manière à y intégrer un indicateur de distribution du courrier électronique indicatif d'une réception asynchrone du courrier électronique.

Ce mode de réalisation est avantageux lorsque des premiers destinataires du message sont sur un réseau à fort débit, alors que des seconds destinataires sont sur un réseau à faible débit. Ainsi, les seconds destinataires recevront le message après les premiers destinataires. Il est donc important, par l'ajout d'un indicateur dans le message, d'indiquer à un premier destinataire que certains autres destinataires peuvent ne pas avoir reçu le message au moment où il le lit.
- le procédé comporte, en outre, les étapes consistant à : analyser le contenu du courrier électronique à envoyer de manière à déterminer s'il comporte une pièce jointe ; et, dans l'affirmative, déposer la pièce jointe sur un serveur de fichiers ; et remplacer, dans le courrier électronique à envoyer, la pièce jointe par un lien pointant vers le serveur de fichiers où a été déposée la pièce jointe.

Ce mode de réalisation est avantageux car l'envoi d'un message avec pièce jointe dans un réseau contraint, c'est-à-dire dont la bande passante est une ressource précieuse, est très dépendant de l'état du réseau. La bande passante étant très variable, le choix d'envoyer tout ou une partie du message et de ses pièces jointes est fait dynamiquement et automatiquement, par exemple en fonction de l'état instantané du réseau. Lorsque la bande passante est réduite, le message est scindé en deux et la pièce jointe est déposée sur un serveur. Le destinataire du message voit dans le corps du message un lien pointant vers le fichier déposé sur le serveur. Lorsqu'il y a plus de débit, le destinataire récupère le fichier en le téléchargeant depuis le serveur.
- la pièce jointe est déposée sur le serveur de fichiers en un emplacement qui dépend d'une valeur d'un indicateur de niveau de privilège associée à un identifiant de destinataire du destinataire du courrier électronique.
- le procédé comporte une étape supplémentaire consistant à évaluer une taille de la pièce jointe contenue dans le courrier électronique à envoyer et à ne déposer la pièce jointe sur le serveur de fichiers et à ne modifier le courrier électronique que lorsque la taille de la pièce jointe est supérieure ou égale à une taille seuil prédéterminée.

L'invention a également pour objet un serveur de courrier électronique, caractérisé en ce qu'il est propre à mettre en oeuvre le procédé conforme au procédé précédent.

L'invention et ses avantages seront mieux compris à la lecture de la description détaillée qui va suivre de différents modes de réalisation, donnés uniquement à titre illustratif et non limitatif de l'invention, la description étant faite en se référant aux dessins annexés, sur lesquels :
- la figure 1 est une représentation schématique d'une architecture informatique permettant l'acheminement d'un courrier électronique entre un serveur émetteur et un serveur destinataire, le serveur émetteur étant conforme au serveur de courrier électronique selon l'invention ;
- la figure 2 est une représentation schématique, sous forme de blocs, d'un mode de réalisation du procédé de sécurisation selon l'invention ;
- la figure 3 est une représentation schématique, sous forme de blocs, d'un mode de réalisation d'un procédé de caractérisation de la distribution d'un courrier électronique ;
- la figure 4 est une représentation schématique, sous forme de blocs, d'un procédé de distribution d'un courrier électronique comportant une pièce jointe ; et

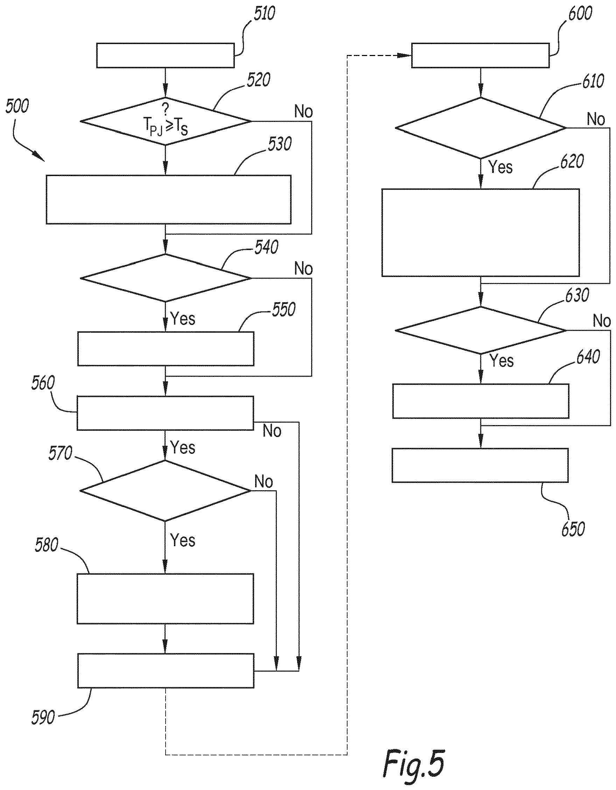

- la figure 5 est une représentation schématique sous forme de blocs d'un mode de réalisation préféré du procédé de sécurisation selon l'invention regroupant les procédés correspondant aux procédés des figures 2, 3 et 4.

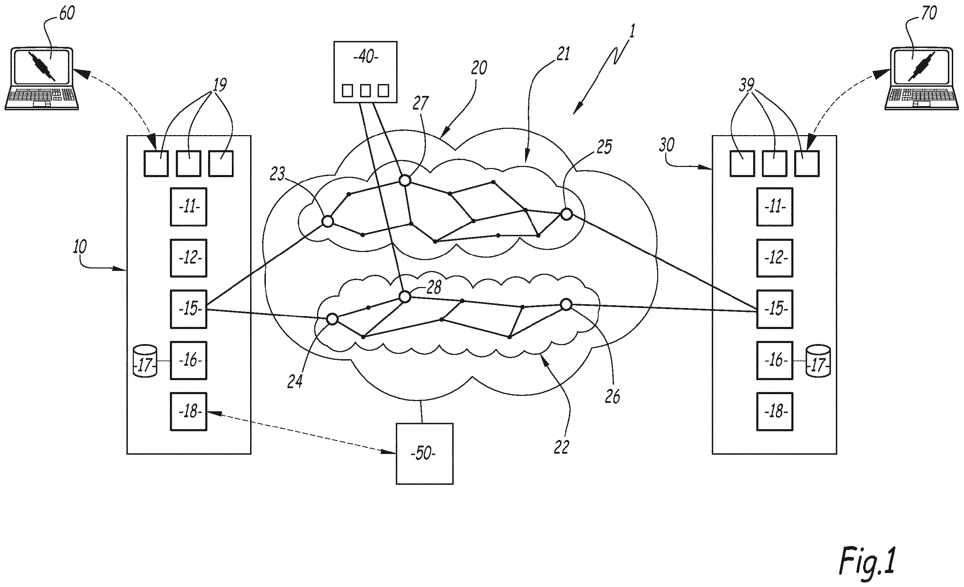

La figure 1 représente une architecture informatique 1 comportant un premier serveur de courrier électronique 10, un second serveur de courrier électronique 30, un serveur de fichiers 40, et un réseau IP 20 auquel les premier et second serveurs, 10 et 30, ainsi que le serveur de fichiers 40 sont connectés.

Le réseau IP 20, qui peut être un réseau public ou privé, est constitué d'une pluralité de nœuds (aussi dénommés ordinateurs routeurs) et de liens (chaque lien connectant deux nœuds entre eux).

Le réseau IP 20 est configuré de manière à comporter un premier sous-réseau 21 et un second sous-réseau 22. Le premier sous-réseau 21 est caractérisé par un premier niveau de sécurité, par exemple un niveau de sécurité bas. Le second sous-réseau 22 est caractérisé par un second niveau de sécurité, par exemple un niveau de sécurité haut. En variante, le réseau IP comporte un plus grand nombre de sous-réseaux, pouvant être caractérisés par un indicateur de niveau de sécurité ayant plus de deux valeurs, deux sous-réseaux pouvant être caractérisés, au même instant, par la même valeur de l'indicateur de niveau de sécurité.

Un sous-réseau est défini de telle sorte que l'acheminement d'un datagramme IP entre n'importe quelle paire de nœuds de ce sous-réseau s'effectue le long d'un chemin de routage situé intégralement à l'intérieur de ce sous-réseau. De la sorte, à chaque instant de l'acheminement du datagramme IP, celui-ci est traité conformément au niveau de sécurité caractéristique de ce sous-réseau.

Pour accéder au premier sous-réseau 21, le premier serveur 10 est connecté à un premier point d'accès d'entrée 23 et le second serveur 30 est connecté à un premier point d'accès de sortie 25.

Pour accéder au second sous-réseau 22, le premier serveur 10 est connecté à un second point d'accès d'entrée 24 et le second serveur 30 est connecté à un second point d'accès de sortie 26.

Avantageusement, pour accéder au premier sous-réseau 21, respectivement au second sous-réseau 22, le serveur de fichiers 40 est connecté à un premier point d'accès intermédiaire 27, respectivement un second point d'accès intermédiaire 28.

Est associé au réseau IP 20, un orchestrateur réseau 50.

De manière générale, un orchestrateur réseau est un programme exécuté sur un ordinateur (machine physique ou virtuelle). Ce programme est par exemple configuré pour utiliser, comme cela est connu de l'homme du métier un langage YANG modélisant les services réseaux pour agir sur des éléments de ce réseau par des interfaces, par exemple de type NETCONF. L'une de ces fonctions permet de déterminer, à chaque instant, l'état du réseau IP qu'il supervise. L'orchestrateur réseau détermine notamment l'état courant de chaque sous-réseau du réseau IP et le niveau de sécurité que chaque sous-réseau est propre à garantir à chaque instant. L'orchestrateur réseau est une fonctionnalité fournie par l'opérateur du réseau IP.

Ainsi, rapporté au cas particulier de la figure 1, l'orchestrateur réseau 50 tient à jour une table indiquant une valeur pour un indicateur de niveau de sécurité du premier sous-réseau et une valeur pour un indicateur de niveau de sécurité du second sous-réseau.

De manière connue en soit, un serveur de courrier électronique, tel que les premier et second serveurs 10 et 30, comporte plusieurs boîtes aux lettres, 19, 39, chaque boîte aux lettres étant associée à un utilisateur.

Au moyen d'une application de courrier électronique adaptée, exécutée sur un terminal client propre à se connecter au serveur de courrier électronique, l'utilisateur peut accéder à sa boîte aux lettres afin de consulter un courrier reçu et d'éditer le contenu d'un courrier à envoyer et d'envoyer ce dernier, en appuyant par exemple sur une icône adaptée d'une interface graphique de l'application de courrier électronique.

Dans ce qui suit, l'exemple de l'acheminement d'un courrier électronique depuis le premier serveur 10, fonctionnant alors en émission, vers le second serveur 30, fonctionnant alors en destinataire, sera plus particulièrement illustré. Bien évidemment, le second serveur fonctionne également en émission et le premier serveur en réception. Ainsi, l'utilisateur émetteur accède à sa boite aux lettres sur le premier serveur 10 au travers d'une application exécutée sur un terminal client 60 et le ou l'un des utilisateurs destinataires accède à sa boite aux lettres sur le second serveur 30 au travers d'une application exécutée sur un terminal client 70.

Le procédé de sécurisation selon l'invention étant mis en oeuvre lors de l'émission d'un courrier électronique, le premier serveur 10 va maintenant être présenté plus en détail. Cependant, le second serveur 30 qui peut être conforme à l'état de la technique est avantageusement identique au premier serveur 10.

Le premier serveur 10 comporte un module de traitement 11 propre à analyser le contenu d'un courrier électronique à envoyer depuis l'une des boites aux lettres 19. Dans le présent mode de réalisation, le module 11 est propre à extraire du contenu du courrier la valeur d'un identifiant de destinataire pour chacun des destinataires du courrier et/ou la valeur d'un indicateur de niveau de sécurité, et/ou la présence d'une pièce jointe.

Le premier serveur 10 comporte un module de marquage 12 propre à modifier le contenu d'un courrier électronique à envoyer. Le module 12 est propre par exemple à ajouter la valeur d'un indicateur de qualité de réception, et/ou un lien de substitution d'une pièce jointe.

Le serveur 10 comporte un module d'émission 15 permettant la transmission d'un courrier électronique à envoyer vers un point d'accès du réseau 20. Le module 15 est ainsi propre à sélectionner le premier ou le second point d'accès d'entrée à partir de l'identifiant de sous-réseau fourni par l'orchestrateur 50.

Le serveur 10 comporte un module de pilotage du routage 18 propre à coopérer avec l'orchestrateur réseau 50 pour obtenir un identifiant de sous-réseau vers lequel transmettre un courrier électronique à envoyer pour respecter le niveau de sécurité d'acheminement de ce courrier requis, indiqué par une valeur particulière d'un indicateur de niveau de sécurité.

Le premier serveur 10 comporte également un module d'annuaire 16 propre à consulter une base de données, dénommée annuaire 17 dans ce qui suit, en y appliquant des requêtes adaptées. L'annuaire 17 est une base de données regroupant différentes informations relatives aux destinataires des courriers électroniques pouvant être émis depuis le premier serveur 10. L'annuaire 17 comporte par exemple, associé(s) à l'identifiant de destinataire, un indicateur de niveau de sécurité et/ou un indicateur de qualité de réception et/ou un indicateur de privilège.

Si, dans le mode de réalisation présenté ici en détail, le serveur de courrier électronique, 10 ou 30, héberge l'annuaire 17, en variante, cet annuaire est hébergé sur une autre machine, par exemple connectée au domaine auquel appartient le serveur de courrier électronique considéré ou encore au réseau IP 20. Le module d'annuaire 16 du serveur de courrier électronique considéré est alors propre à communiquer avec cette autre machine pour obtenir des informations de cet annuaire.

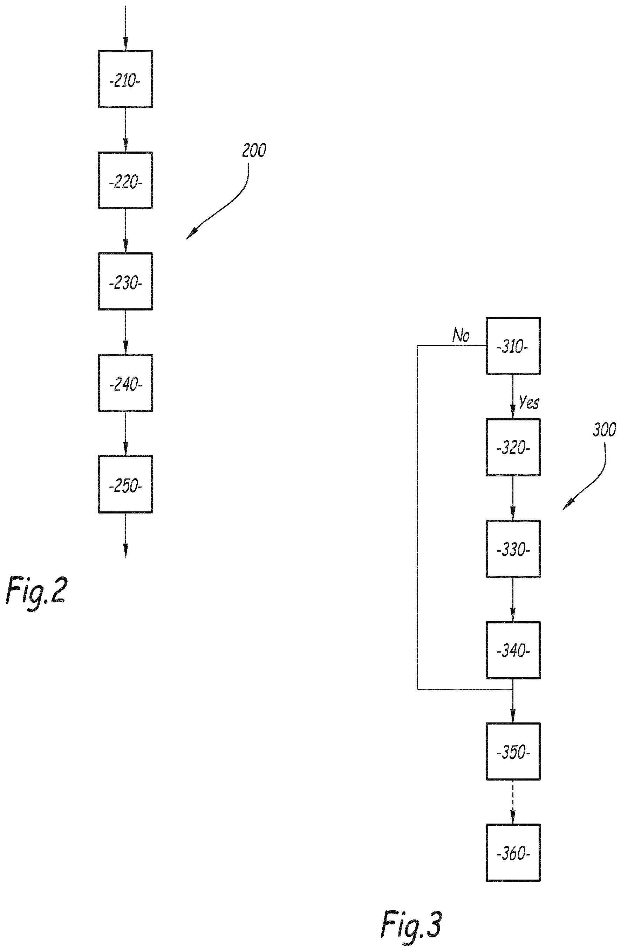

En se référant maintenant à la figure 2, un mode de réalisation d'un procédé de sécurisation de l'acheminement d'un courrier électronique conformément à un niveau de sécurité prédéterminé va être présenté.

Le procédé 200 débute après que l'utilisateur d'une boîte aux lettres 19 du premier serveur 10 ait cliqué sur une icône «envoyer» avec l'intention d'envoyer le courrier électronique qu'il vient de préparer à son ou ses destinataire(s).

Dans une étape 210, le premier serveur 10 réalise une analyse du contenu du courrier à envoyer. Pour ce faire, le module de traitement 11 est exécuté. L'analyse a pour but d'extraire, du contenu du courrier à envoyer, l'identifiant de destinataire du ou de chaque destinataire du courrier. Pour cela, le module 11 cherche, dans le contenu du courrier, un champ caractéristique de destinataire et lit la valeur associée à ce champ, c'est-à-dire l'identifiant de destinataire. Cet identifiant peut par exemple prendre la forme d'une adresse de la messagerie électronique du destinataire.

Une fois le destinataire identifié, à l'étape 220, le premier serveur 10 appelle le module d'annuaire 16 de manière à consulter l'annuaire 17 pour extraire la valeur de l'indicateur de niveau de sécurité associé à l'identifiant de destinataire obtenu en sortie de l'étape 210.

La valeur de l'indicateur de niveau de sécurité indique le niveau de sécurité avec lequel un courrier électronique doit être acheminé vers le destinataire associé à l'identifiant de destinataire.

De préférence, l'annuaire comporte, associées à un destinataire, non seulement la valeur de l'indicateur de niveau de sécurité, mais également la valeur d'une clé de hachage. La valeur de la clé de hachage résulte par exemple du hachage, au moyen d'une fonction connue, de l'adresse de messagerie du destinataire et de la valeur de l'indicateur de sécurité. Lors de la réception de la valeur de l'indicateur de niveau de sécurité, le module d'annuaire 16 est propre à contrôler l'intégrité de cette valeur à partir de la valeur de la clé de hachage correspondante. On est ainsi certain que la valeur de l'indicateur de niveau de sécurité n'a pas été corrompue, par exemple lors de son acheminement sur le réseau dans le cas d'un annuaire hébergé sur une machine distante du serveur de courrier électronique.

En réponse, le module d'annuaire 16 fournit un indicateur de niveau de sécurité. Par exemple, le module 16 indique la valeur haute pour le niveau de sécurité associé au destinataire du courrier. Dans le cas où plusieurs niveaux de sécurité sont associés à un même destinataire, le module 16 envoie la valeur du niveau de sécurité la plus élevée.

Puis à l'étape 230, le premier serveur 10 appelle le module de routage 18 qui interroge alors l'orchestrateur réseau 50 en lui demandant quel sous-réseau du réseau IP 20 est susceptible de garantir l'acheminement d'un courrier conformément à la valeur de l'indicateur de niveau de sécurité obtenu à l'issue de l'étape 220.

Après avoir consulté la table qu'il tient à jour, l'orchestrateur réseau 50 répond au module de routage 18 en lui passant l'identifiant du sous-réseau propre à garantir le niveau de sécurité requis. Par exemple, l'orchestrateur réseau 50 indique que le second sous-réseau 21 est à sélectionner pour l'acheminement selon un niveau de sécurité haut.

A l'étape 240, le premier serveur 10 exécute le module d'émission 15 en lui demandant de transmettre le courrier vers le sous-réseau dont l'identifiant a été obtenue à l'issue de l'étape 230, en l'occurrence l'identifiant du second sous-réseau. Le module d'émission 15, qui sait par quel point d'accès d'entrée le premier serveur 10 est connecté à chacun des sous-réseaux du réseau IP, associe à l'identifiant de sous-réseau l'identifiant du point d'accès d'entrée correspondant. Ainsi, le module 15 détermine que le premier serveur 10 est connecté au second sous-réseau par le second point d'accès d'entrée 24 et sélectionne donc le second point d'accès d'entrée 24 en tant que point d'accès vers lequel transmettre le courrier.

A l'étape 250, le module d'émission 15 transmet le courrier électronique au point d'accès d'entrée sélectionné, dans notre cas le second point d'accès d'entrée 24.

Puis, de manière connue en soit, une fois que le second point d'accès d'entrée a reçu le courrier électronique, il l'achemine le long d'un chemin de routage restant à l'intérieur du second sous-réseau 22 de manière à garantir qu'à chaque instant de son acheminement le courrier sera traité conformément au niveau de sécurité requis, en l'occurrence le niveau haut. Le courrier électronique est transmis de nœud en nœud du second point d'accès d'entrée 24 au second point d'accès de sortie 26, puis au second serveur 30. Là il est déposé dans la boite aux lettres 39 du destinataire où il peut être consulté par ce dernier accédant à sa boîte aux lettres au travers d'un terminal client exécutant une application de courrier électronique adaptée.

Dans une première variante du procédé 200, si le courrier électronique à émettre comporte plusieurs destinataires et si, après avoir consulté les valeurs des indicateurs de niveau de sécurité associés à chacun des destinataires, telles qu'indiquées dans l'annuaire, le premier serveur constate que ces valeurs sont différentes entre elles, le premier serveur décide de ne pas envoyer le courrier électronique et d'indiquer à l'utilisateur que le courrier ne peut être émis à cause d'une divergence entre les niveaux de sécurité requis par chacun des différents destinataires.

Dans une seconde variante du procédé 200, indépendante de la précédente, l'application de courrier électronique de l'utilisateur est adaptée pour lui permettre de sélectionner lui-même la valeur de l'indicateur de niveau de sécurité avec laquelle il souhaite que ce courrier soit acheminé. Un champ de niveau de sécurité avec la valeur sélectionnée par l'utilisateur est alors ajouté au contenu du courrier électronique. L'émission du courrier ne s'effectue plus sur la base du destinataire et du niveau de sécurité qu'il lui est associé dans un annuaire, mais directement en fonction de la valeur de l'indicateur de niveau de sécurité indiqué dans le corps du courrier. Dans ces conditions, le module d'analyse recherche non plus le champ destinataire, mais le champ de niveau de sécurité. La valeur lue de l'indicateur du niveau de sécurité est ensuite passée au module de routage 18 et les étapes 230 à 250 sont réalisées.

En se référant maintenant à la figure 3, un mode de réalisation d'un procédé de caractérisation de la distribution d'un courrier électronique va être présenté. Avantageusement, ce procédé est combiné avec le procédé illustré la figure 2.

Ce procédé vise à répondre au problème suivant. La connexion du second serveur 30 au réseau IP 20 peut être une connexion haut débit et l'application de courrier électronique exécutée sur le terminal client 70 du destinataire exécutée en permanence, de sorte que ce destinataire recevra et pourra consulter en temps réel, c'est-à-dire sensiblement immédiatement, un courrier reçu. En revanche, la connexion entre le second serveur 30 et le réseau IP 20 peut être une connexion bas débit et/ou le terminal client 70 du destinataire connecté à ce second serveur par intermittence, de sorte que le destinataire ne pourra recevoir et/ou consulter le courrier reçu qu'avec un certain retard.

Ainsi, si les différents destinataires d'un même courrier électronique ont des qualités de réception différentes, ils ne recevront pas en même temps le courrier électronique. On parlera alors d'une réception asynchrone par opposition.

Au contraire lorsque les différents destinataires reçoivent ou sont susceptibles de recevoir le courrier au même instant, la qualité de leur connexion étant similaire, on parlera de transmission synchrone.

Or, il y a un besoin pour indiquer à un premier destinataire qu'un second destinataire est susceptible de ne pas prendre connaissance des informations contenues dans le courrier reçu au même instant. Par exemple, dans le cas d'échanges de courriers électroniques sur un théâtre d'opérations, il est nécessaire de savoir si les autres destinataires partagent l'information du courrier que l'on vient de recevoir.

Le procédé 300 répond à ce besoin. Il débute après que l'utilisateur d'une boîte aux lettres du premier serveur 10 a cliqué sur une icône « envoyer » pour envoyer le courrier électronique qu'il a préparé dans l'interface graphique de l'application de courrier électronique exécuté par le terminal client 60.

Dans une étape 310, le module de traitement 11 est exécuté pour filtrer le contenu du courrier à envoyer. Il détermine si ce courrier doit être transmis à un ou plusieurs destinataires. Dans la négative, c'est-à-dire si le courrier ne comporte qu'un identifiant de destinataire, le procédé passe directement à l'étape 350 et le courrier est transmis sur le réseau IP 20.

Dans l'affirmative, c'est-à-dire si le courrier comporte plusieurs identifiants de destinataire, le procédé 300 se poursuit par une étape 320 consistant à appeler le module d'annuaire 16 pour consulter l'annuaire 17 de manière à extraire, pour chacun des identifiants de destinataire indiqués dans le courrier, un indicateur de qualité de réception, indicatif de la qualité de réception des courriers par le destinataire correspondant.

Puis, à l'étape 330, il est vérifié, par le module de marquage 12, que les différents destinataires sont associés à une même valeur de l'indicateur de qualité de réception. Dans l'affirmative, un indicateur de distribution prend la valeur VRAIE indicative d'une réception essentiellement synchrone du courrier par les différents destinataires. En revanche, dans la négative, c'est-à-dire si les différents destinataires sont associés à des valeurs d'indicateur de qualité de réception différentes, l'indicateur de distribution prend la valeur FAUSSE indicative d'une réception asynchrone du courrier par les différents destinataires.

A l'étape 340, le module de marquage 12 modifie le contenu du courrier à envoyer en y ajoutant un champ dont la valeur correspond à celle de l'indicateur de réception.

Puis, à l'étape 350 le courrier électronique modifié est transmis par le module d'émission 15 sur le réseau IP 20.

De manière connue, le courrier électronique modifié est acheminé d'un point d'accès d'entrée vers les points d'accès de sortie auxquels sont connectés les serveurs hébergeant les boites aux lettres des différents destinataires du courrier.

A l'étape 360, lorsqu'un destinataire consulte sa boîte aux lettres hébergée sur le second serveur 30, il est informé de la distribution synchrone ou asynchrone de ce courrier au moyen de l'indicateur de réception. A l'instant où il lit ce courrier, il a donc une indication lui permettant de déterminer si l'information contenue dans ce courrier est partagée par les autres destinataires de ce courrier. De préférence, l'application de courrier électronique exécutée sur le terminal client 70 est adaptée pour pouvoir interpréter la valeur de l'indicateur de réception, pour par exemple afficher dans l'interface graphique de l'application de courrier électronique une icône adaptée.

En variante, dans l'étape 320, c'est le module de routage 18 qui est appelé au lieu du module d'annuaire 16, de manière à interroger l'orchestrateur réseau 50 et obtenir une information de qualité de réception pour chaque identifiant de destinataire. En effet, l'orchestrateur réseau est propre à tenir à jour une base de données constituant une cartographie capacitaire du réseau IP 20. Ainsi, alors que dans le mode de réalisation présenté ci-dessus en détail, l'indicateur de qualité de réception est plutôt relatif à la qualité d'accès du destinataire à sa boite aux lettres (c'est-à-dire à la qualité du lien entre le terminal client 70 et le serveur de courrier électronique 30), dans la présente variante, l'indicatif de la qualité de réception est plutôt relatif à la qualité des communications entre le serveur émetteur 10 et le serveur destinataire 30 sur le réseau IP.

Dans encore une autre variante, l'indicateur de qualité de réception est une combinaison de ces deux types d'information.

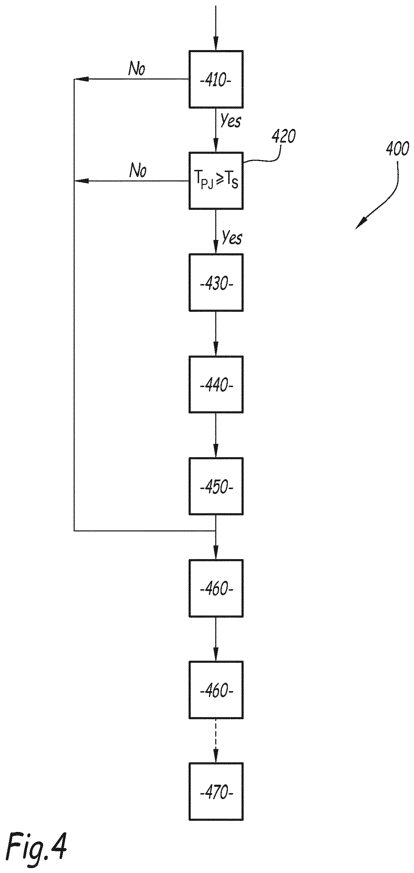

En se référant maintenant à la figure 4, un mode de réalisation d'un procédé de distribution d'un courrier électronique va être présenté. Ce procédé vient avantageusement compléter le procédé de la figure 2.

Ce procédé vise à répondre au problème associé à la présence d'une pièce jointe de taille importante dans le courrier électronique à envoyer. En effet, alors que le corps d'un courrier électronique ne fait en général que quelques kilooctets, une pièce jointe peut rapidement alourdir un courrier. Ceci ralentit son acheminement à travers le réseau de communication jusque sur le serveur destinataire. Ceci ralentit également la consultation du courrier reçu par l'application de courrier électronique du destinataire, voir même empêche la remise du message. En effet, si le courrier électronique est trop volumineux sont acheminement sur le réseau IP risque de monopoliser une bande passante importante. Celle-ci n'est pas toujours disponible et le courrier électronique peut être jeté après un nombre fini prédéterminé de tentatives de transmission. On connait par ailleurs des serveurs de courrier électronique qui limite la taille des courriers qu'il est possible d'émettre ou de recevoir.

Le procédé 400 répond à ce problème. Il débute après que l'utilisateur émetteur ait cliqué sur une icône « envoyer » avec l'intention d'envoyer le courrier électronique qu'il a préparé vers un destinataire.

A l'étape 410, le module de traitement 11 est appelé pour analyser l'intégralité du contenu du courrier électronique à envoyer à la recherche d'un champ indiquant le destinataire du courrier et d'un champ indiquant la présence d'une pièce jointe.

Si l'analyse est infructueuse, c'est-à-dire si le courrier ne comporte pas de pièce jointe, le procédé 400 passe à l'étape 460 dans laquelle le module d'émission 15 est exécuté pour transmettre le courrier à un point d'accès du réseau IP 20.

En revanche, si le module de traitement 11 identifie la présence d'une pièce jointe, alors, à l'étape 420, la taille T_{PJ} de cette pièce jointe est évaluée et comparée avec une taille seuil T_{S}. Si la taille de la pièce jointe est inférieure à la taille seuil (T_{PJ} <T_{S}), le module d'émission 15 est appelé (étape 460) pour transmettre l'intégralité du courrier électronique vers le réseau IP 20, c'est-à-dire le courrier incluant la pièce jointe.

En revanche, si la taille de la pièce jointe est supérieure ou égale à la taille seuil (T_{PJ} >= T_{S}), à l'étape 430, le module d'annuaire 16 est appelé pour extraire de l'annuaire 17 la valeur d'un indicateur de niveau de privilège associé à l'identifiant de destinataire obtenu à l'étape 410. La valeur de cet indicateur indique avec quelle exigence de sécurité doit être traitée la pièce jointe. Dans un mode de réalisation particulier l'indicateur de niveau de privilège est identique à l'indicateur de niveau de sécurité du procédé 200.

Puis, à l'étape 440, le module 12 est exécuté pour séparer la pièce jointe du reste du courrier et la stocke sur le serveur de fichiers 40, dans une zone d'enregistrement correspondant à la valeur de l'indicateur de niveau de privilège associée au destinataire tel qu'indiqué à l'issue de l'étape 430.

Avantageusement, avant de déposer la pièce jointe sur le serveur de fichiers, le module 12 vérifie que, sur le serveur de fichiers 40, le destinataire est enregistré avec des droits d'accès à la zone d'enregistrement qui sont compatibles de la valeur de l'indicateur de niveau de privilège. Par exemple, le module 12 interroge un annuaire de droits d'accès au serveur de fichiers 40 de manière à obtenir la valeur des droits d'accès du destinataire et la compare ensuite à la valeur de l'indicateur de niveau de privilège. Le module 12 utilise par exemple une règle de comparaison adaptée. En cas de vérification négative, la pièce jointe n'est pas déposée sur le serveur 40. En cas de vérification positive, la pièce jointe est déposée sur le serveur 40.

Puis, à l'étape 450, le contenu du courrier électronique est modifié. Le module de marquage 12 substitue à la pièce jointe, un lien, par exemple du type HyperText, pointant vers la zone d'enregistrement sur le serveur de fichiers 40 où a été déposée la pièce jointe à l'étape 440.

Une fois le courrier modifié, à l'étape 460, il est transmis, à travers le réseau, vers le serveur hébergeant la boite aux lettres du destinataire.

A l'étape 470, lorsque le destinataire consulte sa boite aux lettres, il prend connaissance du contenu du courrier électronique modifié. Si celui-ci comporte un lien, il peut le suivre pour accéder à la zone d'enregistrement du serveur de fichiers 40 où a été déposée la pièce jointe ou télécharger la pièce jointe depuis cette zone pour en prendre connaissance.

La figue 5 présente un mode de réalisation du procédé de sécurisation de l'acheminement d'un courrier électronique regroupant des variantes des procédés illustrés par les figures 2, 3 et 4.

Le procédé 500 est initié par l'utilisateur lorsqu'il valide l'envoi d'un courrier électronique (étape 510).

A l'étape 520, le contenu du courrier est analysé de manière à déterminer s'il comporte une pièce jointe et si la taille de celle-ci est supérieure ou égale à une taille seuil prédéfinie. Si ce n'est pas le cas, le procédé passe à l'étape 540.

Au contraire, si le courrier comporte une pièce jointe de grande taille, alors, à l'étape 530, la pièce jointe est séparée du reste du courrier et déposée sur le serveur de fichiers 40. Un lien HyperText est inséré dans le corps du courrier en remplacement de la pièce jointe.

Puis, à l'étape 540, est déterminé le niveau de sécurité avec lequel le courrier (éventuellement modifié à l'étape 530) doit être acheminé vers son ou ses destinataire(s).

Si le courrier comporte un indicateur de niveau de sécurité dont la valeur a été sélectionnée par l'utilisateur lors de l'édition du courrier, alors, à l'étape 550, après avoir interrogé l'orchestrateur réseau 50 de manière à déterminer le sous-réseau permettant de garantir l'acheminement du courrier selon le niveau de sécurité requis, le courrier est associé à l'adresse IP du point d'accès d'entrée de ce sous-réseau auquel le premier serveur 20 est connecté.

Si le courrier ne comporte pas un tel indicateur le procédé passe directement à l'étape 560.

A l'étape 560, on détermine si le courrier comporte plusieurs destinataires.

Dans la négative, le procédé passe à l'étape 590.

Dans l'affirmative, à l'étape 570 on détermine s'il risque d'y avoir une désynchronisation dans la distribution du courrier compte tenu de la disparité entre les capacités de réception et de consultation des courriers électroniques entre les différents destinataires. Cela se fait par exemple en interrogeant l'annuaire 17 associant à chaque destinataire, la valeur d'un indicateur de qualité de réception.

Dans l'affirmative, à l'étape 580, un indicateur de distribution est ajouté au contenu du courrier.

Dans la négative, le procédé passe à l'étape 590.

Enfin, à l'étape 590, le courrier est transmis vers le point d'accès d'entrée du sous-réseau du réseau IP sélectionné à l'état 550.

Le courrier est acheminé à travers le réseau IP 20 pour être reçu (étape 600) par le second serveur 30 hébergeant la boîte aux lettres du ou d'un des destinataire(s).

A l'étape 610, le courrier reçu est analysé pour déterminer s'il contient un indicateur de distribution indiquant une désynchronisation.

Dans la négative, le procédé passe à l'étape 630.

Dans l'affirmative, alors, à l'étape 620, l'application de courrier électronique utilisée par le destinataire ajoute un message ou indique graphiquement que les autres destinataires ne sont pas forcément informés du contenu de ce courrier à l'instant de réception.

Puis, à l'étape 630, le courrier reçu est analysé pour déterminer s'il contient un lien pointant vers une pièce jointe stockée sur le serveur de fichiers 40.

Dans l'affirmative, à l'étape 640, la pièce jointe est téléchargée pour pouvoir être consultée, à l'étape 650, par le destinataire.

## Revendications

1. Procédé (200 ; 500) de sécurisation de l'acheminement d'un courrier électronique entre un serveur de courrier électronique émetteur (10) et un serveur de courrier électronique destinataire (30), connectés l'un à l'autre par un réseau IP (20), le réseau IP comportant au moins des premier et second sous-réseaux (21 ; 22) ayant des niveaux de sécurité différents entre eux, un paquet de données étant transmis entre une paire de nœuds du premier sous-réseau (21), respectivement du second sous-réseau (22), en garantissant qu'en chaque point du chemin de routage dudit paquet de données entre les nœuds de ladite paire de nœuds, ledit paquet de données sera traité selon un premier niveau de sécurité, respectivement un second niveau de sécurité, le serveur de courrier électronique émetteur (10) étant connecté au premier sous-réseau (21) par un premier point d'accès d'entrée (23) et au second sous-réseau (22) par un second point d'accès d'entrée (24) et le serveur de courrier électronique destinataire (30) étant connecté au premier sous-réseau (21) par un premier point d'accès de sortie (25) et au second sous-réseau (22) par un second point d'accès de sortie (26),
ledit procédé consistant en les étapes suivantes, réalisées par le serveur de courrier électronique émetteur (10) :
- analyser le contenu d'un courrier électronique à envoyer de manière à déterminer une valeur d'un indicateur de niveau de sécurité correspondant au niveau de sécurité avec lequel acheminer ledit courrier électronique sur le réseau IP vers le serveur de courrier électronique destinataire (30) ;
- sélectionner, en fonction de la valeur de l'indicateur de niveau de sécurité et les premier et second niveaux de sécurité, le premier point d'accès d'entrée ou le second point d'accès d'entrée en tant que point d'accès au réseau IP à qui transmettre le courrier électronique à envoyer ; et,
- transmettre le courrier électronique à envoyer au point d'accès d'entrée sélectionné, **caractérisé en ce que** le procédé comporte en outre les étapes suivantes, réalisées par le serveur de courrier électronique émetteur (10), consistant à :
- déterminer si le courrier électronique à envoyer possède plusieurs identifiants de destinataire ; dans l'affirmative,
- consulter une base de données associant à chaque identifiant de destinataire une valeur d'un indicateur de qualité de réception correspondant à une capacité du destinataire de recevoir et consulter un courrier électronique en temps réel ; et, au cas où les valeurs des indicateurs de qualité de réception diffèrent entre elles,
- modifier le courrier électronique à envoyer de manière à y intégrer un indicateur de distribution du courrier électronique indicatif d'une réception asynchrone du courrier électronique.

2. Procédé selon la revendication 1, dans lequel, le réseau IP (20) comportant un orchestrateur réseau (50) propre à déterminer, à chaque instant, le premier niveau de sécurité susceptible d'être fourni par le premier sous-réseaux (21) et le second niveau de sécurité susceptible d'être fourni par le second sous-réseau (22), l'étape de sélection consiste à interroger l'orchestrateur réseau (50) pour obtenir un identifiant d'au moins un sous-réseaux propre à fournir un niveau de sécurité conforme à la valeur de l'indicateur de niveau de sécurité déterminée lors de l'étape d'analyse, puis à sélectionner, en tant que point d'accès d'entrée, le point d'accès connectant le serveur de courrier électronique émetteur (10) au sous-réseau dont l'identifiant correspond à celui indiqué par l'orchestrateur réseau (50).

3. Procédé selon la revendication 1 ou la revendication 2, dans lequel un utilisateur associe à un courrier électronique à envoyer, une valeur de l'indicateur de niveau de sécurité.

4. Procédé selon la revendication 1 ou la revendication 2, dans lequel l'étape d'analyse consiste à déterminer un identifiant de destinataire correspondant à un destinataire du courrier électronique, et à lire, dans un annuaire (17) du serveur de courrier électronique émetteur (10) la valeur de l'indicateur de niveau de sécurité associée audit identifiant de destinataire.

5. Procédé selon la revendication 4, dans lequel, s'il est déterminé que le courrier électronique à envoyer comporte plusieurs identifiants de destinataire et que les valeurs de l'indicateur de niveau de sécurité associées à chacun desdits identifiants de destinataires sont différentes entre elles, le courrier électronique n'est pas transmis.

6. Procédé selon l'une quelconque des revendications précédentes, comportant, en outre, les étapes consistant à :
- analyser le contenu du courrier électronique à envoyer de manière à déterminer s'il comporte une pièce jointe ; et, dans l'affirmative,
- déposer la pièce jointe sur un serveur de fichiers (40) ; et,
- remplacer, dans le courrier électronique à envoyer, la pièce jointe par un lien pointant vers le serveur de fichiers (40) où a été déposée la pièce jointe.

7. Procédé selon la revendication 6, dans lequel la pièce jointe est déposée sur le serveur de fichiers (40) en un emplacement qui dépend d'une valeur d'un indicateur de niveau de privilège associée à un identifiant de destinataire du destinataire du courrier électronique.

8. Procédé selon la revendication 6 ou la revendication 7, **caractérisé en ce qu'**il comporte une étape supplémentaire consistant à évaluer une taille de la pièce jointe (T_{PJ}) contenue dans le courrier électronique à envoyer et à ne déposer la pièce jointe sur le serveur de fichiers (40) et à ne modifier le courrier électronique que lorsque la taille de la pièce jointe est supérieure ou égale à une taille seuil (T_{S}) prédéterminée.

9. Serveur de courrier électronique (10, 20), **caractérisé en ce qu'**il est propre à mettre en œuvre le procédé selon l'une quelconque des revendications 1 à 8.

## Patentansprüche

1. Verfahren (200; 500) zur Sicherung der Weiterleitung einer E-Mail zwischen einem sendenden E-Mail-Server (10) und einem Empfänger-E-Mail-Server (30), die durch ein IP-Netz (20) miteinander verbunden sind, wobei das IP-Netz mindestens ein erstes und ein zweites Teilnetz (21 ; 22) mit gegenseitig unterschiedlichen Sicherheitsniveaus aufweist, wobei ein Datenpaket zwischen einem Paar von Knoten des ersten Teilnetzes (21) bzw. des zweiten Teilnetzes (22) übertragen wird, wobei sichergestellt wird, dass an jedem Punkt des Leitweges des Datenpakets zwischen dem Paar von Knoten das Datenpaket gemäß einem ersten Sicherheitsniveau bzw. einem zweiten Sicherheitsniveau verarbeitet wird, der sendende E-Mail-Server (10) mit dem ersten Teilnetz (21) durch einen ersten Eingangszugangspunkt (23) und mit dem zweiten Teilnetz (22) durch einen zweiten Eingangszugangspunkt (24) verbunden ist und der Empfänger-E-Mail-Server (30) mit dem ersten Teilnetz (21) durch einen ersten Ausgangszugangspunkt (25) und mit dem zweiten Teilnetz (22) durch einen zweiten Ausgangszugangspunkt (26) verbunden ist,
wobei das Verfahren aus den folgenden Schritten besteht, die von dem sendenden E-Mail-Server (10) durchgeführt werden:
- Analysieren des Inhalts einer zu versendenden E-Mail, um einen Wert eines Sicherheitsstufenindikators zu bestimmen, der der Sicherheitsstufe entspricht, mit der die E-Mail über das IP-Netz an den Empfänger-E-Mail-Server (30) weiterzuleitet ist;
- Auswählen, basierend auf dem Wert des Sicherheitsstufenindikators und der ersten und zweiten Sicherheitsstufe, des ersten Eingangszugangspunkts oder des zweiten Eingangszugangspunkts als den Zugangspunkt zu dem IP-Netzwerk, an das die zu sendende E-Mail weitergeleitet werden soll; und,
- Übertragen der zu sendenden E-Mail an den ausgewählten Eingangszugangspunkt, dadurch charakterisiert, dass das Verfahren ferner die folgenden Schritte aufweist, durchgeführt durch den sendenden E-Mail-Server (10), bestehend aus:
- Feststellen, ob die zu versendende E-Mail mehrere Empfängerkennungen hat; wenn ja,
- Konsultieren einer Datenbank, die jeder Empfängerkennung einen Wert eines Empfangsqualitätsindikators zuordnet, der einer Fähigkeit des Empfängers entspricht, eine E-Mail in Echtzeit zu empfangen und abzurufen; und für den Fall, dass die Werte der Empfangsqualitätsindikatoren voneinander abweichen,
- Modifizieren der zu versendenden E-Mail derart, dass sie einen Zustellungsindikator für E-Mail enthält, der den asynchronen Empfang der E-Mail anzeigt.

2. Verfahren nach Anspruch 1, wobei das IP-Netzwerk (20) einen Netzwerk-Orchestrator (50) aufweist, der geeignet ist, zu jedem Zeitpunkt die erste Sicherheitsstufe, die durch das erste Teilnetzwerk (21) bereitgestellt werden kann, und die zweite Sicherheitsstufe, die durch das zweite Teilnetzwerk (22) bereitgestellt werden kann, zu bestimmen, wobei der Auswahlschritt darin besteht, den Netzwerk-Orchestrator (50) abzufragen, um eine Kennung mindestens eines Teilnetzes zu erhalten, das geeignet ist, eine Sicherheitsstufe in Übereinstimmung mit dem Wert des während des Analyseschrittes ermittelten Indikators für die Sicherheitsstufe bereitzustellen, und dann als Eingangszugangspunkt den Zugangspunkt auszuwählen, der den sendenden E-Mail-Server (10) mit dem Teilnetz verbindet, dessen Kennung der vom Netzwerk-Orchestrator (50) angegebenen entspricht.

3. Verfahren nach Anspruch 1 oder Anspruch 2, wobei ein Benutzer einen Wert des Sicherheitsstufenindikators einer zu sendenden E-Mail zuordnet.

4. Verfahren nach Anspruch 1 oder Anspruch 2, bei dem der Analyseschritt darin besteht, eine Empfängerkennung zu bestimmen, die einem Empfänger der E-Mail zugeordnet ist, und in einem Verzeichnis (17) des sendenden E-Mail-Servers (10) den Wert des Indikators für das Sicherheitsniveau zu lesen, der der genannten Empfängerkennung zugeordnet ist.

5. Verfahren nach Anspruch 4, wobei, wenn festgestellt wird, dass die zu versendende E-Mail mehrere Empfängerkennungen aufweist und dass die Werte des Sicherheitsstufenindikators, der mit jeder der Empfängerkennungen verbunden ist, voneinander unterschiedlich sind, die E-Mail nicht übertragen wird.

6. Verfahren nach einem der vorhergehenden Ansprüche, ferner aufweisend die Schritte bestehend aus:
- Analysieren des Inhalts der zu versendenden E-Mail, um festzustellen, ob sie einen Anhang enthält; und, falls ja,
- Ablegen des Anhangs auf einem Dateiserver (40); und,
- Ersetzen des Anhangs in der zu versendenden E-Mail durch einen Link, der auf den Dateiserver (40) zeigt, auf dem der Anhang abgelegt wurde.

7. Verfahren nach Anspruch 6, wobei der Anhang auf dem Dateiserver (40) an einem Ort abgelegt wird, der von einem Wert eines Privilegstufenindikators abhängt, der einer Empfängerkennung des E-Mail-Empfängers zugeordnet ist.

8. Verfahren nach Anspruch 6 oder Anspruch 7, **dadurch gekennzeichnet, dass** es einen zusätzlichen Schritt aufweist, der darin besteht, eine Größe des in der zu versendenden E-Mail enthaltenen Anhangs (Tpj) auszuwerten und den Anhang nur dann auf dem Dateiserver (40) zu hinterlegen und die E-Mail nur dann zu ändern, wenn die Größe des Anhangs größer oder gleich einer vorgegebenen Schwellengröße (T_{S}) ist.

9. E-Mail-Server (10, 20), **dadurch gekennzeichnet, dass** er zur Durchführung des Verfahrens nach einem der Ansprüche 1 bis 8 geeignet ist.

## Claims

1. Method (200; 500) for securing forwarding of an e-mail between a sender e-mail server (10) and a recipient e-mail server (30) which are connected one to the other by an IP network (20), the IP network comprising at least first and second sub-networks (21; 22) which have different security levels between them, a data packet being transmitted between a pair of nodes of the first sub-network (21), respectively of the second sub-network (22), whilst guaranteeing that, at any point of the routing path of said data packet between the nodes of said pair of nodes, said data packet will be processed according to a first security level, respectively a second security level, the sender e-mail server (10) being connected to the first sub-network (21) by a first input access point (23) and to the second sub-network (22) by a second input access point (24) and the recipient e-mail server (30) being connected to the first sub-network (21) by a first output access point (25) and to the second sub-network (22) by a second output access point (26),
said method consisting of the following steps, produced by the sender e-mail server (10):
- analysing the content of an e-mail to be sent so as to determine a value of a security level indicator corresponding to the security level with which to forward said e-mail over the IP network to the recipient e-mail server (30):
- selecting, as a function of the value of the security level indicator and the first and second security levels, the first input access point or the second input access point as access point to the IP network on which to transmit the e-mail to be sent; and
- transmitting the e-mail to be sent to the selected input access point,
**characterised in that** the method comprises, furthermore, the following steps, produced by the sender e-mail server (10), consisting of:
- determining if the e-mail to be sent has several recipient usernames; in the affirmative,
- checking a database associating with each recipient username a value of a reception quality indicator corresponding to a capacity of the recipient to receive and check an e-mail in real time; and, in the case where the values of the reception quality indicators are different from each other,
- modifying the e-mail to be sent so as to integrate therein a distribution indicator of the e-mail which is indicative of an asynchronous reception of the e-mail.

2. Method according to claim 1, in which, the IP network (20) comprising an orchestration network (50) which is able to determine, at any moment, the first security level which can be provided by the first sub-network (21) and the second security level which can be provided by the second sub-network (22), the selection step consists of interrogating the orchestration network (50) in order to obtain a username of at least one sub-network which is able to provide a security level according to the value of the security level indicator determined during the analysis step, then to select, as input access point, the access point connecting the sender e-mail server (10) to the sub-network, the username of which corresponds to that indicated by the orchestration network (50).

3. Method according to claim 1 or claim 2, in which a user associates with an e-mail to be sent a value of the security level indicator.

4. Method according to claim 1 or claim 2, in which the analysis step consists of determining a recipient username corresponding to a recipient of the e-mail, and reading, in a directory (17) of the sender e-mail server (10), the value of the security level indicator associated with said recipient username.

5. Method according to claim 4, in which, if it is determined that the e-mail to be sent comprises several recipient usernames and that the values of the security level indicator associated with each of said recipient usernames are different from each other, the e-mail is not transmitted.

6. Method according to any of the preceding claims, comprising, furthermore, the steps consisting of:
- analysing the content of the e-mail to be sent so as to determine if it comprises an attachment; and, in the affirmative,
- filing the attachment on a file server (40); and
- replacing, in the e-mail to be sent, the attachment by a link pointing to the file server (40) where the attachment has been filed.

7. Method according to claim 6, in which the attachment is filed on the file server (40) in a place which depends on a value of a privilege level indicator associated with a recipient username of the recipient of the e-mail.

8. Method according to claim 6 or claim 7, **characterised in that** it comprises a supplementary step consisting of evaluating a size of the attachment (T_{PJ}) contained in the e-mail to be sent and of not filing the attachment on the server file (40) and of not modifying the e-mail when the size of the attachment is greater than or equal to a predetermined threshold size (Ts).

9. E-mail server (10, 20), **characterised in that** it is able to implement the method according to any of claims 1 to 8.
